# EUROPEAN PATENT APPLICATION

(11) **EP 4 307 245 A1**
(43) Date of publication of application: **17.01.2024**
(21) Application number: 22184990.4
(22) Date of filing: 14.07.2022
(51) Int. Cl.: G06V 10/82, G06V 20/13, G06V 20/17, G06V 20/52

(54) **METHODS AND SYSTEMS FOR OBJECT CLASSIFICATION AND LOCATION**

(71) Applicant: Helsing GmbH, 81671 Munich (DE)
(72) Inventor: FECHTNER, Ron, 81671 Munich (DE); HOLMBERG, Olle, 81671 Munich (DE); TUNA, Ahmet, 81671 Munich (DE); RAUCHENSTEINER, Michael, 81671 Munich (DE); FINK, Robert, 81671 Munich (DE)
(74) Representative: Rummler, Felix

(57) **Abstract**

The disclosure relates to a method and system for determining a location-dependent parameter associated with an object and classifying an object. The methods comprise capturing, by a first sensor, first sensor data representing at least one object, classifying the at least one object based on the first sensor data and/or determining a location-dependent parameter associated with the at least one object based on a size parameter. The methods may comprise capturing, by a second sensor, sensor data representing the at least one object for determining location-dependent parameters, and/or selectively deactivating or disengaging the second sensor from the at least one object.

## Description

### Field

The present disclosure generally relates to object classification and object location techniques. In particular, methods and systems for object classification and object location using continuous tracking with only one sensor are disclosed.

### Background

Classification and location of objects using sensors is widely applied in image analysis for recognition, navigation and military applications among others. The use of a single sensor, such as a single camera allows for image capturing, however, the size, location, and/or distance of an object in front of the camera cannot be easily determine without additional sensor information. For example, an object might be large and far away or it might be small and close, but appear in a same size for the camera. However, size information is crucial in object classification and object location, in particular, location of a moving object.

There is a need to improve object classification and location in setups with object tracking using only one sensor.

### Summary

According to a first aspect of this disclosure, there is provided a method for determining a location-dependent parameter associated with an object. The method comprises capturing, by a first sensor, first sensor data representing at least one object, classifying the at least one object based on the first sensor data, determining a size parameter associated with the at least one object based on its classification and determining a location-dependent parameter associated with the at least one object based on the size parameter.

The method allows determining a location-dependent parameter or the location of an object with a single sensor, e.g. single camera, without binocular cues. Sensor data are captured and may comprise electro-optical, infrared, radar, synthetic aperture radar, LIDAR, acoustic, seismic and/or signal-intelligence data, or the like. For example, the pixels of a camera image may be representing the object. From such classification, a size parameter, e.g. the dimensions of the object, can be determined. For example, if the object is classified as a car, the potential dimensions can be derived (e.g. a length of between 4 and 5m). If a particular car model is identified, the exact dimensions are known. The size parameter, e.g. dimensions can be obtained from a database based on the classification. Based on the size parameter, e.g. the known dimensions, the location-dependent parameter, e.g. the distance of the object from the camera, can be determined.

According to a second aspect, a method for classifying an object is disclosed. The method comprises capturing, by a first sensor, first sensor data representing at least one object, obtaining a location-dependent parameter associated with the at least one object, determining a size parameter associated with the at least one object based on the first sensor data and the location-dependent parameter and classifying the at least one object based on the first sensor data and the size-dependent parameter.

Again, the first sensor can be a camera, and the images captured by the camera can be processed using known object recognition techniques to identify an object in the images, e.g. a car. In addition, a location-dependent parameter is obtained. This can be done using a second sensor included in the same device (e.g. a drone) as the first sensor, e.g. a laser range finder. Alternatively, the location-dependent parameter can be obtained from another (external) source (e.g. another drone or a satellite). Based on the combination of first sensor data and location-dependent parameter, a size parameter, e.g. dimensions of the object, can be determined more precisely. Based on the dimensions, the object can be classified more accurately. For example, if the first sensor data represents a vehicle and the size parameter indicates an object length of 4.5m, it can be deferred that the vehicle is a passenger car rather than a truck. In other words, the size can be used as an additional parameter to improve the accuracy of the object classification. Thereby, the method allows for improving object classification of an object.

According to an embodiment, obtaining the location-dependent parameter comprises obtaining the location-dependent parameter from a remote source. A remote source may, e.g. be another sensor on another drone, a satellite or a command center. Thereby external information may be incorporated into the classification method enabling a more precise object classification.

According to an alternative or additional embodiment, obtaining the location-dependent parameter comprises capturing, by a second sensor, sensor data representing the location-dependent parameter. For example, the second sensor may be a laser range finder contained in the same device (e.g. a drone) as the first sensor.

In another embodiment, the method further comprises selectively deactivating the second sensor, or selectively disengaging the second sensor from the at least one object, in particular in response to determining said size parameter and/or classifying the at least one object. The second sensor may be selectively deactivated and/or disconnected from a data network, e.g. by shutting the sensor off or putting the sensor in a standby mode. The second sensor may also be deactivated in response to connection errors e.g. of a wireless connection between the sensor and a data network or malfunctioning of the sensor. Deactivating the sensor may enable saving energy. Further, deactivating the second sensor may enable handling interruptions in the sensor connection. Deactivating the second sensor may further avoid revealing the location of the sensor and thereby the location of e.g. the drone carrying the sensor. Thus, the method may include turning off the second sensor as soon as it has completed capturing the sensor data representing the location-dependent parameter.

Alternatively, the second sensor may be selectively disengaged from the at least one object, i.e. the object of interest. The second sensor may be disengaged from this object and engaged to a different object. Thereby, resources may be managed or saved, because one second sensor can observe or track several objects in sequence or iteratively. In an example, the second sensor may be selectively disengaged from the at least one object, if the object is no longer visible to the second sensor e.g. due to occlusions and/or if the second sensor cannot capture sensor data indicative of said object due to function faults or e.g. because the at least one objects moves too fast to be captured by the second sensor. Thereby, only sensor data indicative of or representing the at least one object are captured, thereby saving memory space occupied by erroneous sensor data.

According to another aspect of this disclosure, there is provided another method for determining a location-dependent parameter associated with an object. The method comprises capturing, by a first sensor, first sensor data representing at least one object, obtaining a first location-dependent parameter associated with the at least one object, determining a size parameter associated with the at least one object based on the first sensor data and the first location-dependent parameter, capturing, by the first sensor, second sensor data representing the at least one object and determining a second location-dependent parameter associated with the at least one object based on the size parameter and the second sensor data.

The first sensor may be a camera. Images from the camera may be processed to detect an object. The first location-dependent parameter may be obtained through a second sensor. For example, the second sensor may be a laser range finder for determining the distance between the object. Based on the first sensor data (images) and the second sensor data (distance), the size of the object may be determined. Once the size of the object is known, the object can be tracked accurately using the first sensor data only. The initial (first) location (corresponding to the first location-dependent parameter) can be updated continuously to determine new locations of the object (the second location-dependent parameter).

In an embodiment using a second sensor, obtaining the first location-dependent parameter comprises capturing, by the second sensor, sensor data representing the first location-dependent parameter. For example, the second sensor may be a laser range finder. The method may be implemented in a drone including the first and second sensors.

In an alternative embodiment, obtaining the first location-dependent parameter comprises obtaining the first location-dependent parameter from a remote source. For example, the location of the object is obtained from another drone or from a command center or from a satellite.

In another embodiment, the method further comprises selectively deactivating the second sensor, or selectively disengaging the second sensor from the at least one object, in particular in response to determining said size parameter and/or said second location-dependent parameter. Deactivation may be performed in response to malfunctioning of the sensor, lost vision of the object, loss of (wireless) connection to a data network, or the like. Disengagement of the sensor from the object may be used to manage resource, i.e. disengaging the sensor from one object and switching it to monitor another object.

According to an embodiment, in any of the above methods, the second sensor is used to selectively capture sensor data in respect of a plurality of objects, including said at least one object. For example, the second sensor may track several objects consecutively, wherein each object is tracked for a predetermined time period. In another example, one object may no longer be visible to the second sensor, e.g. due to occlusions. In such a case, the second sensor may switch to capturing data of another object and may return to tracking the first object when it is visible again. This enables managing resources. This may be useful, for example, if the method is implemented in a drone where resources may be scarce, e.g. due to weight constraints or limited power supply.

According to an embodiment, in any of the methods, the size parameter includes a size and/or a range of potential sizes associated with the at least one object and/or any of said location-dependent parameters includes a distance and/or range of potential distances of the object from the first sensor or a device containing the first sensor, and/or an absolute location or a location relative to the first sensor or the device containing the first sensor.

Objects may be detected and identified based on characteristic features, such as shape, movement and/or appearance, and classified based on the identification. For example, an object may be classified as a vehicle. A minimum and maximum potential size of the object may then be determined e.g. by comparison to a database. For example, a minimum size for a passenger vehicle may be found to be 3 m and a maximum size for a vehicle may be 5 m. Based on this size range, a minimum and maximum potential distance of the object to the sensor is determined and thereby, a potential location of the object can be determined. The smaller the size range, the more accurately the potential location or distance may be determined.

According to another embodiment, the methods further comprise determining a trajectory of the at least one object based on its classification, size parameter and/or any of said location-dependent parameters and predicting a future location of the at least one object based on the trajectory. Even if the object is no longer visible to the first and/or second sensor, the trajectory of the object, if moving, can be predicted. This enables an efficient resource management and allows for reliable object tracking in complex scenarios.

In a further embodiment, classifying the at least one object comprises comparing the at least one object with a plurality of stored objects in a database and assigning at least one predetermined class to the at least one object based on the comparison and/or analyzing the at least one object using a classification algorithm, in particular a trained artificial neural network and assigning the at least one object to at least one predetermined class based on the analysis.

The comparison may be based on technical, physical, visual or other characteristics such as shape, movement and/or appearance of the detected and stored objects. Based on the comparison, a class may be assigned to the detected object. For example, a moving object which has a rectangular shape when viewed from above may be assigned to the class "vehicle". This enables determining a potential size range of the object.

According to another aspect of this disclosure, there is provided a system that is configured to implement a method according to any of the aspects, embodiments or examples described above. For example, the system may implement or include a drone comprising the first and second sensors as described above.

In a further aspect, there is provided a computer program product comprising a computer-readable storage medium including instructions that, when executed by a processor, cause the processor to perform a method according to any of the aspects, embodiments or examples described above.

### Brief description of the drawings

The features, objects, and advantages of the present disclosure will become more apparent from the detailed description set forth below when taken in conjunction with the drawings in which like reference numerals refer to similar elements.
**Figure 1** depicts a block diagram of a system for determining a location of an object according to one or more embodiments;
**Figure 2** schematically illustrates determining a minimum and maximum size and distance of an object;
**Figure 3** schematically illustrates determining a location of an object;
**Figure 4** depicts a flow chart of a method for determining a location-dependent parameter according to one or more embodiments;
**Figure 5** depicts a low chart of a method for classifying an object according to one or more embodiments;
**Figure 6** depicts a flow chart of a method for determining a location-dependent parameter according to one or more embodiments.

### Detailed description of the preferred embodiments

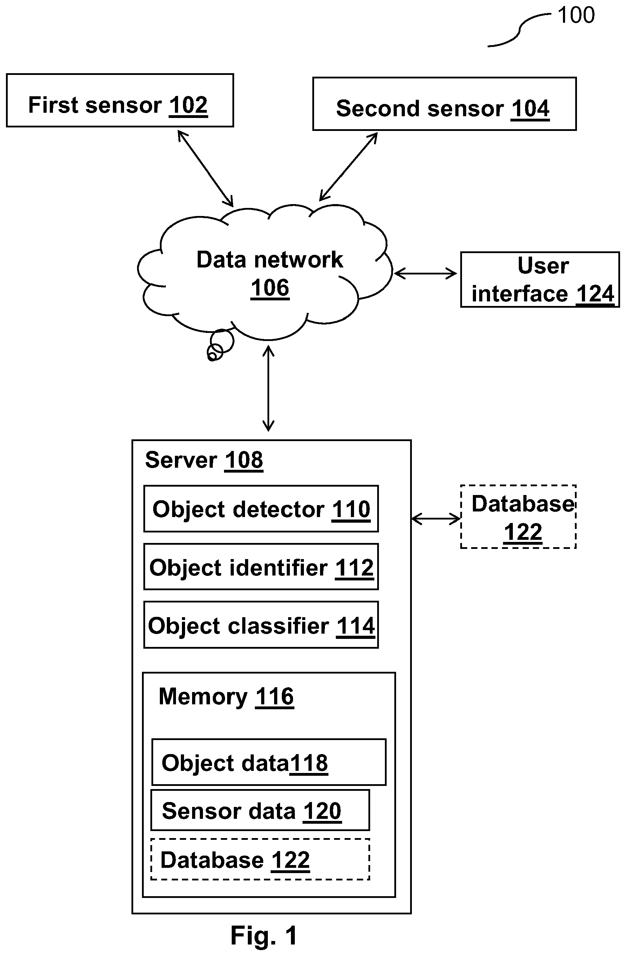

Figure 1 depicts a block diagram of a system 100 for determining a location-dependent parameter associated with an object and for classifying an object. The system 100 comprises a first sensor 102, a second sensor 104 and a user interface 124 which are in communication with a server 108 via a data network 106.

In some embodiments, there may be plurality of first sensors 102, and/or a plurality of second sensors.

The data network 106 may be any suitable data communication network or combination of networks, including hardwire based networks such as cable and telephone networks, and/or wireless based networks such as wireless local- or wide-area networks, satellite, and cellular phone communication networks, etc.

The server 108 may include a plurality of servers located at a central site or across various distributed sites. The server 108 includes an object detector 110 that implements routines to detect objects based on their shape, size, movement, appearance or other technical, physical, or visual characteristics. The server 108 further includes an object identifier 112 that implements routines to identify, tag and/or label detected objects. The server 108 includes an object classifier 114 which assigns classes to the objects as described below in more detail. The server 108 comprises a memory 116 which includes object data 118, sensor data 120 and, optionally, a database 122. The memory 116 may be a random access memory (RAM), a hard disk drive, a removable storage drive, flash memory, and/or any similar non-volatile storage media.

Alternatively or additionally, one or more of the object detector 110, the object identifier 112 and the object classifier 114 may be co-located with the first sensor 102 and/or the second sensor 104. For example, the object detector 110, the object identifier 112 and the object classifier 114 may be included in a computing system on a drone or other vehicle also carrying the first sensor 102 and second sensor 104.

The user interface 124 may be configurable to output data determined by the object detector 110, object identifier 112 and/or object classifier 114. The object data 118 and/or sensor data 120 may be output by the user interface 124. The user interface 124 may be further configurable to enable user input, e.g. for interfering with the object detection, identification and/or classification, for selecting sensor data, for selectively disengaging the sensor(s) from an object, for selectively deactivating the sensor(s), or the like.

According to a first example, first sensor data is captured by the first sensor 102. The first sensor data may include any one or more of electro-optical, infrared, radar, synthetic aperture radar, LIDAR, acoustic, seismic, and signal-intelligence data, or the like. The first sensor 102 may be installed on vehicles (manned/unmanned), drones, airplanes, vessels, satellites, or the like. The first sensor data may be transmitted from the first sensor 102 over the data network 106 and stored in the memory 116 of the server 108. The first sensor data may include a plurality of datasets, e.g. a plurality of consecutively received datasets of a data stream. Additionally or alternatively, the plurality of datasets may be received by a plurality of first sensors 102. The first sensor data may comprise image and/or video data.

The first sensor data is indicative of one or more objects, such as military objects. The objects are detected in the first sensor data, e.g. within the captured image or video data. Static and/or dynamic objects may be captured at one or more moments in time. The objects may be detected by an object detector 110 of the server 108 based on characteristics such as their shape, motion and/or appearance. The objects may then be identified, by the object identifier 112, as recognizable objects, i.e. objects which may be tracked over time. In other words, the objects may be tagged or labeled for subsequent recognition or tracking.

The object classifier 114 classifies the identified object(s) based on the first sensor data. In particular, the object may be classified based on its visual and/or associated technical or physical characteristics. The object classifier 114 may be configured to compare the object, in particular the characteristics of the object, with respective data in a database 122. The database 122 may comprise a plurality of classes. Classes may comprise characteristics for a plurality of objects. For example, an object may be classified as a "vehicle" due to its rectangular shape when viewed from above and its movement.

The classes may be organized in a hierarchical system. For example, a class "vehicle" may be subdivided into classes "motorcycle", "passenger car", "truck", etc. The class "passenger car" may be subdivided into classes for specific car models such as "BMW 3 series".

The database 122 may be stored in the memory 116 of the server 108. Alternatively the database 122 may be stored on another external server which is communicatively coupled to the server 108. The database 122 may configured to be updated via the user interface 124. For example, the database 122 may be updated with new characteristics of the detected objects, subject to verification by a user via the user interface 124.

The assignment of one or more classes to an object may be based on exceeding a threshold value indicative of the similarity of one or more technical, physical, visual or other characteristics of the detected object with respective one or more characteristics of the object in the database.

Additionally or alternatively, the object classifier 114 may analyse the identified object using a classification algorithm. The object classifier 114 may then assign the object to one or more predetermined classes.

For example, the classification algorithm may comprise an artificial neural network, NN. For example, a trained machine learned model or other NN may be used to analyse the captured first sensor data and output data to detect, identify and classify an object based on its technical characteristics. The NN may comprise an image recognition algorithm. The NN may be trained using a predetermine set of objects with predetermined technical characteristics. The NN may be continuously trained with the data captured by the first (and/or second) sensor 102 (and/or 104).

Individual objects or a plurality of similar or different objects may be detected, identified and/or classified using the same one or a plurality of first sensor data or datasets. The sensor data may be obtained at the same time from different first sensors 102 and/or consecutively from one or more of the first sensors 102.

The object data 118 and/or the sensor data 120 may be stored in the memory 116. The object data 118 may include object classification data, a (tracked) location-dependent parameter, e.g. a location, a size parameter, e.g. a minimum and maximum size, of the object, and/or the like. The object data 120 may be updated with the last known location and/or location-dependent parameter of each detected and identified object during object tracking.

Based on the assigned class, a size parameter of the object, e.g. a minimum and maximum potential size of the object, may be determined. For example, if an object is assigned to the class "vehicle", a range of potential sizes for a vehicle can be retrieved from the database. For example, a typical size range for a vehicle may be determined to be 3-8 m. If an object is assigned to the class "passenger car", a typical size range of 3-5 m may be retrieved.

In another example, the classification may be additionally based on one or more additional location-dependent parameters from which information about the current environment may be derived. For example, a location of the sensor or a drone carrying the sensor may be determined from GPS data or the like. The location information may be obtained from sensor data or from external sources such as a control center. Such location information may be used to narrow down the range of potential objects or classes of objects that may be present in that environment: For example, if the location of the sensor or drone is determined to be above land, a moving vehicle is likely to be a land vehicle, e.g. a passenger car, truck, tank, etc. If, on the other hand, the location of the sensor is determined to be above water, a moving vehicle is likely to be a boat or ship. In another example, if a moving object classified as a vehicle is located in an environment on land without streets, the object may be classified as an off-road vehicle such as a tank or a tractor.

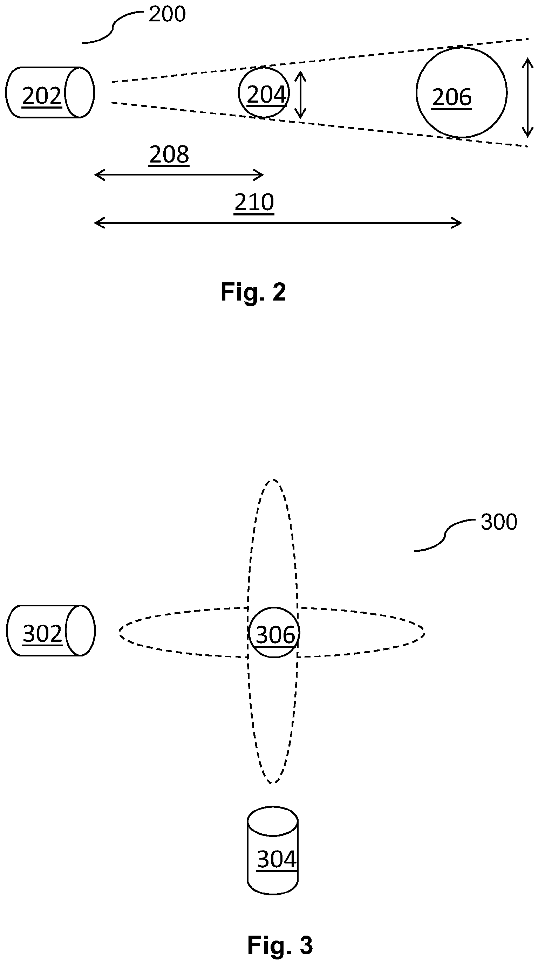

Referring to Figure 2, a potential minimum distance 208 and a potential maximum distance 210 between the first sensor 202 and the object may be determined based on the minimum potential size 204 and the maximum potential size 206. This range of distances may be determined based on intrinsic and extrinsic sensor parameters, e.g. intrinsic and extrinsic camera parameters.

Based on the potential minimum and maximum distances between the first sensor 202 and the object 204, a location-dependent parameter, e.g. a parameter indicative of a potential location of the object, may be determined.

According to another example, the determination of the size and/or classification of the object may be improved using an additional second sensor. Referring to Figure 3, for example, the size of an object 306 may be determined with accuracy using first sensor data captured by a first sensor 302 and second sensor data captured by a second sensor 304. For example, the first sensor 302 may be a visible light camera and the second sensor 304 may be a LIDAR sensor. The first sensor data may be indicative of the shape of the object and a size of the object, relative to its distance to the first sensor 302. The second sensor data may be indicative of the absolute distance between the object and the second sensor 304. The first and second sensors 302 and 304 may be positioned on a vehicle (drone), for example, at a fixed distance to each other. The first and second sensor data may be combined using sensor fusion techniques such as triangulation or laser range finding. Thereby, the size of the object 306 or a range of potential sizes of the object may be determined accurately.

In another example, the first and second sensors 302 and 304 may include first and second visible light cameras, respectively, which capture the first and second sensor data, i.e. first and second images or videos of the object, from different angles. Using sensor fusion, a three-dimensional image may be determined. Similarly, depending on the chosen combination of the first sensor 302 and the second sensor 304, other technical, physical or visual characteristics of the object may be accurately determined. The additional information about the object determined based on the first sensor data and the second sensor data may be used to improve the classification of the object by the object classifier 114. For example, a classification of an object based only on first sensor data may allow the object classifier 114 to assign the object to the class "vehicle", while sensor fusion with second sensor data may allow for an assignment to the class "BMW 3 series".

The second sensor 304 may have a higher resolution and/or sensitivity than the first sensor 302, e.g. a higher depth resolution. The first sensor 302 may include a camera, e.g. an RGB light camera, with a wide angle lens configured to capture images with a relatively large field of view. Thus, the first sensor 306 can capture panoramic images that may include a plurality of objects. The second sensor 304 may include an (RGB) camera configured to focus on portions of the environment and/or one or more selected individual objects contained in the panoramic images.

The object identifier 112 (Fig. 1) may identify and tag the objects based on the sensor data of the first sensor 302. One or more of the tagged objects may then be selected for monitoring by the second sensor 304. The criteria for section may include one or more of the absolute or relative position of an object, its relative size with respect to other objects, its physical or visual characteristics such as its shape, its direction and/or pace of movement, or the like. The selection may be based on predetermined settings and/or user input via the user interface 124.

The second sensor 304 may then be used to successively determine the distance and/or location of the selected objects by switching attention of the second sensor 304 from one object to another, applying the selection criteria above. From this, the size of the selected objects may be determined with relative accuracy. Thereafter, the device is able to track a plurality of objects using the first sensor 302 only, based on the panoramic image and the size information.

Referring again to Figure 1, the second sensor 104 may track a plurality of objects in a predetermined manner. For example, the second sensor may capture data of each object of a plurality of objects for a predetermined time period. The second sensor 104 may switch between the objects iteratively. Thereby, a predetermined amount of data for each object can be captured, e.g. ensuring that enough data are available for determining a trajectory of each object.

In another example, the second sensor 104 may be deactivated or disconnected from the data network 106. The deactivation may be caused by a user via the user interface 124. For example, the second sensor 104 may be deactivated to save energy. In another example, the second sensor 104 may be disengaged from an object for resource management, e.g. in a scenario wherein the second sensor is positioned on a vehicle such as a drone and a plurality of objects may be investigated by that drone. The second sensor 104 may then be engaged to another object.

In another example, the second sensor may be deactivated or disengaged from an object if the object is not visible for the sensor. This may occur due to the object being masked by other objects in its environment and/or the object moving e.g. into a building or a tunnel. The sensor may be deactivated or disengaged if the object movement is not detectable, e.g. if the object is moving too fast to be captured by the second sensor.

Also, the second sensor 104 may be deactivated in response to a disconnection from the data network 106. The second sensor 104 may also be deactivated or disengaged if it captures data not representing the object or not representing the object properly. For example, the object may have moved out of a field of view of the second sensor 104, or the object may be moving too fast to be tracked by the second sensor 104. Deactivating or disengaging the second sensor 104 in such cases enables saving resources.

The deactivation or disengagement may also be due to errors in the network communication or by occlusions. For example, a drone carrying the second sensor 104 may be moving into a building or tunnel and be disconnected from the data network 106.

In such scenarios, the object data 118 obtained by the second sensor 104 until deactivation or disengagement may be stored in the memory 116 on the server 108 and still be used for further object tracking.

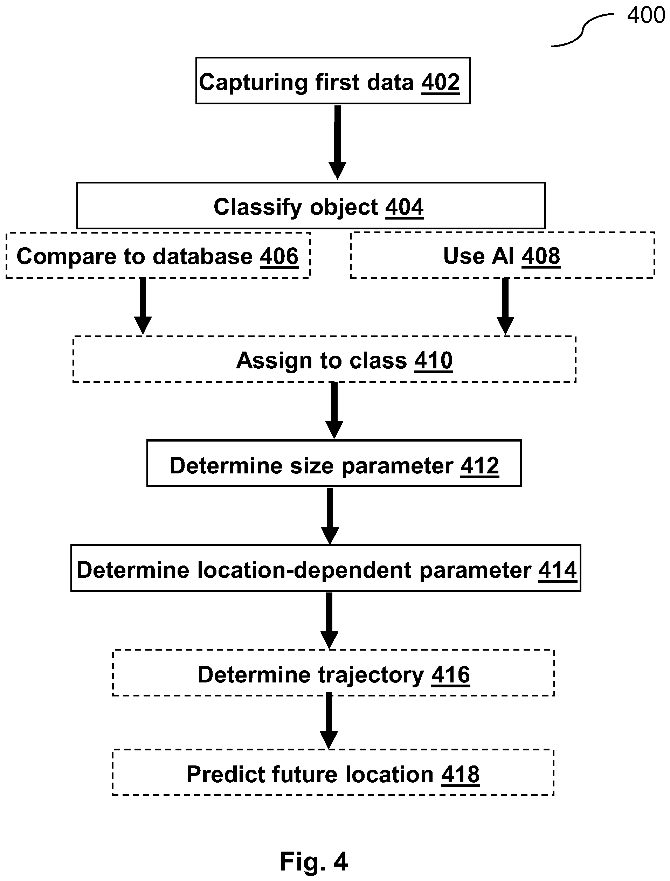

Referring to Figure 4, a method for determining a location-dependent parameter associated with an object is depicted in a flow chart. In step 402, first data is captured. As described in more detail above, the first data is indicative of at least one object. In step 404, the object is then classified. The classification is performed by comparison of technical, physical, visual or other characteristics of the detected object with corresponding datasets database (step 406) and/or by using a classification algorithm such as an artificial neural network (step 408) as described above. The object is then assigned to a class in step 410. Based on the assigned class of the object, a size parameter, e.g. minimum and maximum potential size of the object, is determined in step 412. Based on the size parameter, a location-dependent parameter indicative of a potential location of the object is determined in step 414.

A trajectory of the object(s) may be determined in step 416. For example, the object may be tagged and tracked over time and a trajectory of its movement may be determined. In step 418, a potential future location of the object may be predicted based on the trajectory.

If the number of objects exceeds the number of available sensors, it is possible to track only some of the objects Tracking of the other objects may be resumed based on the trajectories. Thus, the present method enables tracking a relatively high number of objects and at the same time efficiently managing limited sensor resources.

In some situations, the line of sight between the sensors and the objects may be blocked or there may be occlusions such as tunnels or buildings. In such scenarios, the future location of the objects may be predicted. The objects may then be re-identified at or approximate to the predicted location and tracking may be resumed.

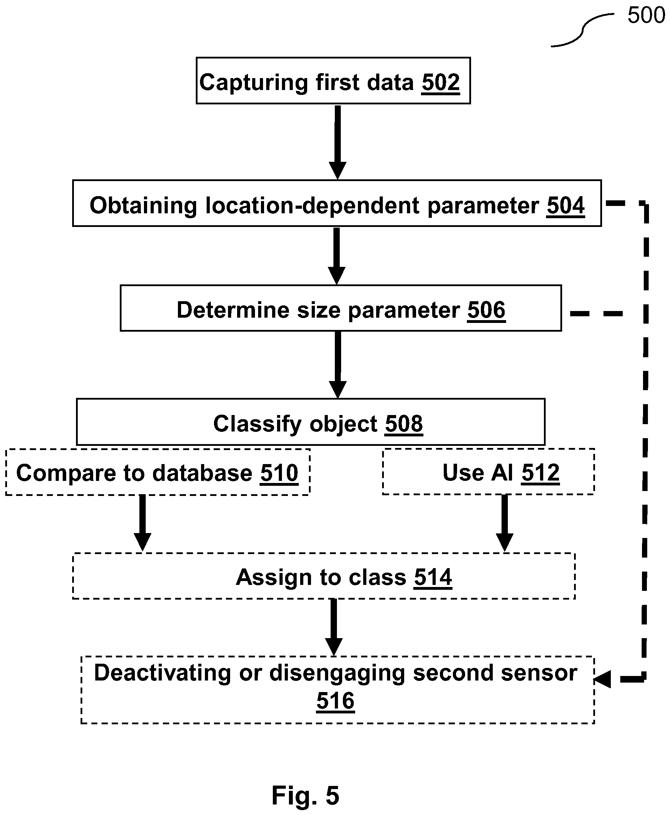

Figure 5 depicts a flow chart of a method 500 for classifying an object. First data are captured by a first sensor in step 502. In step 504, a location-dependent parameter is obtained. As described above in more detail, the location-dependent parameter may be obtained by sensor fusion between the data captured by the first sensor and a second sensor, for example. Alternatively, the location-dependent parameter may be obtained from a remote source. From the location-dependent parameter, a size parameter indicative of the size or a size range of the object is determined in step 506. The object is classified based on the size parameter in step 506. As stated above, the classification may comprise comparing the object (and its characteristics) to datasets in a database (step 510) or using an artificial neural network (step 512). The object is then assigned to a class in step 514.The second sensor may be selectively deactivated or disengaged from the object in step 516 either after class assignment (step 514) or after obtaining the location-dependent parameter (504) or determination of the size parameter (step 506).

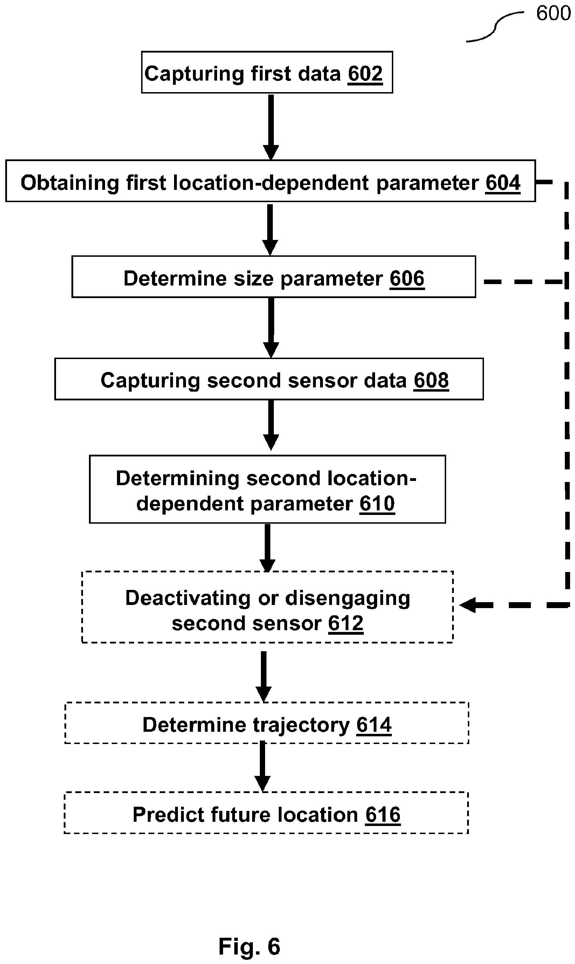

Figure 6 illustrates a method 600 for determining a location-dependent parameter associated with an object. After capturing first sensor data by a first sensor, e.g. at a first time, in step 602, a first location-dependent parameter is obtained in step 604 either from sensor data captured by a second sensor or from a remote source as stated above. A size parameter is determined based on the first location-dependent parameter in step 606. In step 608, second sensor data is captured by the first sensor, e.g. at a second time later than the first time. A second location-dependent parameter is determined based on the first location-dependent parameter and the second data in step 610. The second sensor may be selectively deactivated or disengaged from the object in step 612 after determining the second location-dependent parameter (step 610), after obtaining the first location-dependent parameter (step 604) or after determining the size parameter (step 606). A trajectory of the object may be determined in step 614 based on the first and/or second location-dependent parameter and used to predict a future location of the object in step 616.

### Reference signs

- 100: System for determining a location of an object
- 102: First sensor
- 104: Second sensor
- 106: Data network
- 108: Server
- 110: Object detector
- 112: Object identifier
- 114: Object classifier
- 116: Memory
- 118: Object data
- 120: Sensor data
- 122: Database
- 124: User interface
- 200: System 200 for determining min/max object size and distance
- 202: Camera
- 204: Minimum object size
- 206: Maximum object size
- 208: Minimum distance
- 210: Maximum distance
- 300: System 300 for determining an object location
- 302: First sensor
- 304: Second sensor
- 306: Object location
- 400: Method for determining a location-dependent parameter
- 402-418: Steps of the method 400
- 500: Method for classifying an object
- 502-516: Steps of the method 500
- 600: Method for determining a location-dependent parameter
- 602-616: Steps of the method 600

## Claims

1. A method for determining a location-dependent parameter associated with an object, the method comprising:
capturing, by a first sensor, first sensor data representing at least one object;
classifying the at least one object based on the first sensor data;
determining a size parameter associated with the at least one object based on its classification; and
determining a location-dependent parameter associated with the at least one object based on the size parameter.

2. A method for classifying an object, the method comprising:
capturing, by a first sensor, first sensor data representing at least one object;
obtaining a location-dependent parameter associated with the at least one object;
determining a size parameter associated with the at least one object based on the first sensor data and the location-dependent parameter; and
classifying the at least one object based on the first sensor data and the size-dependent parameter.

3. The method of claim 2, wherein obtaining the location-dependent parameter comprises obtaining the location-dependent parameter from a remote source.

4. The method of claim 2, wherein obtaining the location-dependent parameter comprises capturing, by a second sensor, sensor data representing the location-dependent parameter.

5. The method of claim 4, further comprising selectively deactivating the second sensor, or selectively disengaging the second sensor from the at least one object, in particular in response to determining said size parameter and/or classifying the at least one object.

6. A method for determining a location-dependent parameter associated with an object, the method comprising:
capturing, by a first sensor, first sensor data representing at least one object;
obtaining a first location-dependent parameter associated with the at least one object;
determining a size parameter associated with the at least one object based on the first sensor data and the first location-dependent parameter;
capturing, by the first sensor, second sensor data representing the at least one object; and
determining a second location-dependent parameter associated with the at least one object based on the size parameter and the second sensor data.

7. The method of claim 6, wherein obtaining the first location-dependent parameter comprises obtaining the first location-dependent parameter from a remote source.

8. The method of claim 6, wherein obtaining the first location-dependent parameter comprises capturing, by a second sensor, sensor data representing the first location-dependent parameter, wherein, optionally, the second sensor has a higher resolution and/or a smaller field of view than the first sensor.

9. The method of claim 8, further comprising selectively deactivating the second sensor, or selectively disengaging the second sensor from the at least one object, in particular in response to determining said size parameter and/or said second location-dependent parameter.

10. The method of any of claims 2-9, wherein the second sensor is used to selectively capture sensor data in respect of a plurality of objects, including said at least one object.

11. The method of any preceding claim,
wherein the size parameter includes a size and/or a range of potential sizes associated with the at least one object; and/or
wherein any of said location-dependent parameters includes a distance and/or range of potential distances of the object from the first sensor or a device containing the first sensor, and/or an absolute location or a location relative to the first sensor or the device containing the first sensor.

12. The method of any preceding claim further comprising:
determining a trajectory of the at least one object based on its classification, size parameter and/or any of said location-dependent parameters; and
predicting a future location of the at least one object based on the trajectory.

13. The method of any preceding claim, wherein classifying the at least one object comprises:
comparing the at least one object with a plurality of stored objects in a database; and
assigning at least one predetermined class to the at least one object based on the comparison; and/or
analyzing the at least one object using a classification algorithm, in particular a trained artificial neural network; and
assigning the at least one object to at least one predetermined class based on the analysis.

14. A system comprising:
a first sensor for capturing sensor data representing at least one object; and
optionally, a second sensor for capturing sensor data representing the at least one object and/or a plurality of objects, including said at least one object,
wherein the system is configured to execute the method of any of claims 1 to 13.

15. A computer program product comprising a computer-readable storage medium including instruction that, when executed by a processor, cause the processor to perform the method of any of claims 1 to 13.
